# EUROPÄISCHE PATENTSCHRIFT

(11) **EP 1 073 696 B1**
(45) Veröffentlichungstag und Bekanntmachung des Hinweises auf die Patenterteilung: **11.06.2008**
(21) Anmeldenummer: 99913261.6
(22) Anmeldetag: 17.03.1999
(51) Int. Cl.: C09J 5/00

(54) **Klebestift auf der Basis eines Seifengels**
SOAP GEL BASED GLUE STICK
BATON DE COLLE A BASE D'UN GEL SAVONNEUX

(30) Priorität: 26.03.1998 DE 19813392
(43) Veröffentlichungstag der Anmeldung: 07.02.2001
(73) Patentinhaber: Henkel AG & Co. KGaA, 40589 Düsseldorf (DE)
(72) Erfinder: MAIER, Wolfgang, D-40233 Düsseldorf (DE); KLAUCK, Wolfgang, D-40670 Meerbusch (DE)
(86) Internationale Anmeldenummer: PCT/EP1999/001727
(87) Internationale Veröffentlichungsnummer: WO 1999/048989

(56) Entgegenhaltungen:
- EP-A- 0 405 329
- EP-A- 0 506 300
- FR-A- 2 227 311
- US-A- 3 817 887

## Beschreibung

Die Erfindung betrifft einen Klebestift, herstellbar aus einer wäßrigen Zubereitung eines synthetischen Polymeren mit Klebstoffcharakter und einem Seifengel als formgebender Gerüstsubstanz sowie gewünschtenfalls weiteren Hilfsstoffen. Des weiteren betrifft die Erfindung ein Verfahren zur Herstellung solcher Stifte sowie deren Verwendung.

Klebestifte (= formstabile, stäbchenförmige Klebstoffe, die beim Abreiben auf einer Empfängerfläche einen klebrigen Film hinterlassen) sind heute Gebrauchsgegenstände des täglichen Lebens. Sie enthalten wasserlösliche bzw. wasserdispergierbare synthetische Polymere mit Klebstoffcharakter, gelöst in einer wäßrig-organischen Flüssigphase zusammen mit einer formgebenden Gerüstsubstanz. Als Gerüstsubstanz werden insbesondere Alkali- bzw. Ammoniumsalze aliphatischer Carbonsäuren, insbesondere des C-Zahlbereichs von etwa 12 bis 22, verwendet. Werden die an sich hochklebrigen wäßrigen Zubereitungen der synthetischen Polymeren mit Klebstoffcharakter zusammen mit geringen Mengen der Gerüstsubstanz auf Basis von Fettsäureseifen auf höhere Temperaturen, insbesondere oberhalb 50 °C, erwärmt und läßt man dann diese Lösung in Ruhestellung abkühlen, so erstarrt das Stoffgemisch zu einem mehr oder weniger steifen Seifengel, in dem die formgebende und vergleichweise starre Micellstruktur solcher Seifengele zunächst überwiegend in Erscheinung tritt. Das ermöglicht die bekannte Ausbildung und Handhabung solcher Massen in Stiftform in verschließbaren Hülsen. Beim Abreiben wird die Micellstruktur zerstört und damit die starre Masse in den pastösen Zustand umgewandelt, in dem dann der Klebstoffcharakter des Stoffgemisches in den Vordergrund tritt.

Als wichtigstes Polymer mit Klebstoffcharakter erwies sich zunächst das in der DE 18 11 466 erwähnte Polyvinylpyrrolidon (PVP). Wenngleich die damit hergestellten Klebestifte für die Papierverklebung ausreichende Festigkeit boten, so bestand doch der Wunsch, Stifte zu erhalten, die universeller einsetzbar sind und mit denen Verklebungen höhere Festigkeiten hergestellt werden konnten. Insbesondere sollte vermieden werden, daß sich die mit den Stiften hergestellten Papierverklebungen unter klimatisch ungünstigen Bedingungen wieder lösen. Zur Lösung dieses Problems trug die Verwendung von Polyurethan als Polymer mit Klebstoffcharakter bei.

In der EP 405 329 werden feste, weich abreibende Klebestifte auf der Basis eines Seifengels als formgebende Gerüstsubstanz und einer wäßrigen Polyurethan-Dispersion als klebende Komponente beschrieben. Das Polyurethan ist ein Reaktionsprodukt eines Polyols oder einer Polyolmischung, einer zwei- oder mehrfunktionellen Isocyanat-Komponente, einer in alkalisch wäßriger Lösung zur Salzbildung befähigten Komponente und/oder eines nicht-ionischen hydrophilen Modifizierungsmittels und gewünschtenfalls eines Kettenverlängerungsmittels. Damit wurden in der Tat Verbesserungen erzielt, jedoch reichten die Festigkeiten und die Wärmestandfestigkeit für spezielle Fälle immer noch nicht aus.

Daher ergab sich als Aufgabe, eine formstabile, weich abreibende Masse zu finden, die diese Nachteile nicht hat und die sich nicht nur durch eine leichte Handhabung, sondern auch durch günstige Gebrauchseigenschaften auszeichnet. Insbesondere sollte bei leichter Applizierbarkeit eine anfängliche Korrektur der Verklebung möglich sein und dennoch sowohl ein hoher Tack als auch eine hohe Endfestigkeit und möglichst auch eine hohe Wärmestandfestigkeit erreicht werden.

Die erfindungsgemäße Lösung ist den Patentansprüchen zu entnehmen. Sie besteht im wesentlichen darin, daß als synthetisches Polymer mit Klebstoffcharakter eine Mischung von Polyurethan und Polyvinylpyrrolidon verwendet wird.

Der Klebstift ist "formstabil", da seine Masse bei Raumtemperatur (20 °C) standfeste geometrische Körper auszubilden vermag. Insbesondere sollte ein Klebestift mit einem Durchmesser von 16 mm eine Deformierungslast von 25 bis 50 N gemäß der später beschriebenen Methode zur Druckfestigkeit bei 20 °C haben.

Die Masse des Klebestiftes ist vorzugsweise "weich abreibbar", da auf dem Kopierpapier 5015 Speziell Copier der Fa. Sonnecken bei niedrigem Druck ein gleichmäßiger Film ohne Unebenheiten erhalten wird (s. Testmethode "Abrieb").

Mit "wäßriger Zubereitung" ist eine wäßrige Mischung der Polymeren gemeint, unabhängig vom Verteilungsgrad (echte Lösung, kolloidale Lösung oder Dispersion).

Die erfindungsgemäßen Klebestifte enthalten ein Polyurethan (PU) als klebende Polymerkomponente. Das Polyurethan ist ein Reaktionsprodukt mindestens eines Polyols, mindestens eines mehrfunktionellen Isocyanats, mindestens einer in alkalischer wäßriger Lösung zur Salzbildung befähigten Komponente und/oder eines nichtionischen hydrophilen Modifizierungsmittels und gewünschtenfalls mindestens eines Kettenverlängerungsmittels.

Im Sinne der Erfindung sind Polyurethan-Dispersionen bevorzugte Ausgangsmaterialien für Klebestifte, die opak durchscheinend bis durchsichtig aussehen, und bei denen das Polymere zumindest anteilsweise in Lösung vorliegen dürfte. Dabei gilt das Fachwissen des Polyurethan-Fachmannes, der über den Anteil an ionischen und/oder nicht-ionischen Bestandteilen den Verteilungsgrad beeinflussen kann. Die wäßrige Zubereitung enthält das Polyurethan also vorzugsweise in Form einer Dispersion.

Die als synthetische Polymere in den Klebestiften eingesetzten Polyurethan-Dispersionen werden aus einem Polyol oder einer Polyolmischung als einem wesentlichen Ausgangsprodukt hergestellt. Ganz allgemein gilt hier, daß diese Polyole über zumindest zwei reaktionsfähige Wasserstoffatome verfügen müssen und im wesentlichen linear sind, aber auch verzweigt sein können. Dabei liegt das Molekulargewicht zwischen 300 und 40 000, vorzugsweise zwischen 500 und 20 000. Eingesetzt werden können Polyesterpolyole, Polyacetalpolyole, Polyetherpolyole, Polythioetherpolyole, Polyamidpolyole oder Polyesteramidpolyole mit jeweils 2 bis 4 Hydroxylgruppen, die auch teilweise durch Aminogruppen ausgetauscht sein können. Bevorzugt sind Polyurethane aus Polyether- und/oder Polyesterpolyolen.

Als Polyetherpolyole seien z.B. die Polymerisationsprodukte des Ethylenoxids, Propylenoxids, Butylenoxids sowie ihre Misch- oder Pfropfpolymerisationsprodukte sowie die durch Kondensation von mehrwertigen Alkoholen oder Mischungen derselben und die durch Alkoxylierung von mehrwertigen Alkoholen, Aminen, Polyaminen und Aminoalkoholen gewonnenen Polyether genannt. Auch isotaktisches Polypropylenglykol kann Verwendung finden. Bevorzugtes Polyetherpolyol ist das Polytetrahydrofuran. Unter Polytetrahydrofuran werden hier Polyether verstanden, die theoretisch oder tatsächlich durch ringöffnende Polymerisation von Tetrahydrofuran dargestellt werden können und an beiden Kettenenden jeweils eine Hydroxylgruppe aufweisen. Geeignete Produkte haben dabei einen Oligomerisationsgrad von ca. 1,5 bis 150, vorzugsweise von 5 bis 100.

Eine weitere bevorzugte Klasse von Polyolen sind Polycarbonatpolyole. Bevorzugt sind hier aliphatische Polycarbonatpolyole, also Ester der Kohlensäure mit difunktionellen Alkoholen der Kettenlänge C₂ bis C₁₀ Weniger geeignet sind Polycarbonatpolylole auf Basis von Kohlensäure und Bisphenol-A.

Als Polyacetalpolyole kommen z.B. die aus Glykolen wie Diethylenglykol, Triethylenglykol, 4,4'-Dioxethyoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Unter den Polythioetherpolyolen seien insbesonder die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythioether, Polythiomischether, Polythioetherester, Polythioetheresteramide. Derartige Polyhydroxylverbindungen können auch in alkylierter Form bzw. in Mischung mit Alkylierungsmitteln angewandt werden.

Zu den Polyester-, Polyesteramid- und Polyamid-Polyolen zählen die aus mehrwertigen gesättigten und ungesättigten Carbonsäuren bzw. deren Anhydriden und mehrwertigen gesättigten und ungesättigten Alkoholen, Aminoalkoholen, Diaminen, Polyaminen und ihren Mischungen gewonnenen, überwiegend linearen Kondensate, sowie z.B. Polyterephthalate oder Polycarbonate. Auch Polyester aus Lactonen, z.B. Caprolacton oder aus Hydroxycarbonsäuren sind verwendbar. Die Polyester können Hydroxyl- oder Carboxylendgruppen aufweisen. Zu ihrem Aufbau können als Alkoholkomponente auch höhermolekulare Polymerisate oder Kondensate, wie z.B. Polyether, Polyacetale, Polyoxymethylene (mit)verwendet werden. Die wäßrige Polyurethan-Dispersion enthält vorzugsweise ein Reaktionsprodukt eines Polyether- und/oder Polyesterpolyols als PolyolKomponente.

Auch bereits Urethan- oder Harnstoffgruppen enthaltende Polyhydroxylverbindungen sowie gegebenenfalls modifizeirte natürliche Polyole wie Rizinusöl sind verwendbar. Grundsätzlich kommen auch Polyhydroxylverbindungen, welche basische Stickstoffatome aufweisen, in Frage, z.B. polyalkoxylierte primäre Amine oder Polyester bzw. Polythioether, welche Alkyl-diethanolamin einkondensiert enthalten. Weiterhin eingesetzt werden können Polyole, die durch vollständige oder teilweise Ringöffnung epoxidierter Triglyceride mit primären oder sekundären Hydroxylverbindungen erzeugt werden können, beispielsweise das Umsetzungsprodukt von epoxidiertem Sojaöl mit Methanol. Die Polyole können auch Aminoalkohole oder Diamine enthalten.

Als Polyisocyanate zur Herstellung der erfindungsgemäßen verwendbaren Polyurethane sind alle aromatischen und aliphatischen Diisocyanate geeignet, wie z.B. 1,5-Naphthylendiisocyanat, 4,4'-Diphenylmethandiisocyanat, 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats, gegebenenfalls in Mischung, 1-Methyl-2,4-diisocyanatocyclohexan, 1,6-Diisocyanato-2,2,4-trimethyl-hexan, 1,6-Diisocyanato-2,4,4-trimethylhexan, 1-Isocyanatomethyl-3-isocyanato-1,5,5-trimethyl-cyclohexan, chlorierte und bromierte Diisocyanate, phosphorhaltige Diisocyanate, 4,4'-Diisocyanatophenylperfluorethan, Tetramethoxy-butan-1,4-diisocyanat, Butan-1,4-diisocyanat, Hexan-1,6-diisocyanat, Dicyclohexylmethan-diisocyanat, Cyclohexan-1,4-diisocyanat, Ethylendiisocyanat, Phthalsäure-bis-isocyanatotethylester, ferner Polyisocyanate mit reaktionsfähige Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,2-Diisocyanatododecan und Dimerfettsäure-diisocyanat. Die vorgenannten Isocyanate können allein oder auch in Mischung eingesetzt werden. Bevorzugt sind cyclische oder verzweigte aliphatische Diisocyanate wie Isophorondiisocyanat, aber auch Hexamethylendiisocyanat. Tetramethylxyloldiisocyanat (TMXDI) ist besonders bevorzugt. In untergeordneten Mengen können auch trifunktionelle Isocyanate eingesetzt werden. Die wäßrige Polyurethan-Dispersion ist vorzugsweise ein Reaktionsprodukt mindestens eines zwei- oder dreifunktionellen aliphatischen Isocyanats.

Beim Aufbau der erfindunsgemäß eingesetzten Polyurethan-Dispersionen können auch Kettenverlängerungsmittel mit reaktionsfähigen Wasserstoff eingesetzt werden.

Zu den Kettenverlängungsmitteln mit reaktionsfähigen Wasserstoffatomen zählen:
- die üblichen gesättigten und ungesättigten Glykole, wie Ethylenglykol oder Kondensate des Ethylenglykols, Butandiol-1,3, Butandiol-1,4, Butendiol, Propandiol-1,2, Propandiol-1,3, Neopentylglykol, Hexandiol, Bishydroxymethyl-cyclohexan, Dioxyethoxyhydrochinon, Terephthalsäure-bisglykolester, bernsteinsäure-di-2-hydroxyethyl-amid, Bernsteinsäure-di-N-methyl-(2-hydroxy-ethyl)-amid, 1,4-Di(2-hydroxy-methyl-mercapto)-2,3,5,6-tetrachlorbenzol, 2-Methylpropandiol-(1,3), 2-Methyl-propandiol-(1,3);
- aliphatische, cycloaliphatische und aromatische Diamine wie Ehtylendiamin, Hexamethylendiamin, 1,4-Cyclohexylendiamin, Benzidin, Diamino-diphenylmethan, Dichlor-diamino-diphenylmethan, die Isomeren des Phenyldiamins, Hydrazin, Ammoniak, Carbohydrazid, Adipinsäure-dihydrazid, Sebacinsäuredihydrazid, Piperazin, N-Methyl-propylendiamin, Diamonodiphenylsulfon, Diaminodiphenylether, Diaminodiphenyldimethylmethan, 2,4-Diamino-6-phenyltriazin;
- Aminoalkohole wie Ethanolamin, Propanolamin, Butanolamin, N-Methylethanolamin, N-Methyl-isopropanolamin;
- aliphatische, cycloaliphatische, aromatische und heterocyclische Mono- und Diaminocarbonsäuren wie Glycin, 1- und 2-Alanin, 6-Aminocapronsäure, 4-Aminobuttersäure, die isomeren Mono- und Diaminobenzoesäuren, die isomeren Mono- und Diaminonapthoesäuren;
- Wasser.

Vorzugsweise haben die Polyole als Kettenverlängerungsmittel ein Molekulargewicht von weniger als 300. Es ist hervorzuheben, daß im Rahmen vorliegender Erfindung nicht streng zwischen den Polyolen mit einem Molekulargewicht von 300 bis 20 000 und den sogenannten "Kettenverlängerungsmitteln" unterschieden werden kann, da die Übergänge zwischen den beiden Verbindungsklassen fließend sind. Verbindungen, die nicht aus mehreren Monomereinheiten aufgebaut sind, jedoch ein Molekulargewicht über 300 aufweisen, wie z.B. 3,3'-Dibrom-4,4'-diaminodiphenylmethan, werden zu den Kettenverlängerungsmitteln gerechnet, ebenso jedoch auch Pentaethylenglykol, obwohl letzteres seiner Zusammensetzung nach eigentlich ein Polyetherdiol ist.

Spezielle Kettenverlängerungsmittel mit mindestens einem basischen Stickstoffatom sind z.B. mono-, bis- oder polyoxalkylierte aliphatische, cycloaliphatische, aromatische oder heterocyclische primäre Amine, wie N-Methyldiethanolamin, N-Ethyl-diethanolamin, N-Propyldiethanolamin, N-Isopropyl-diethanolamin, N-Butyldiethanolamin, N-Isobutyl-diethanolamin, N-Oleyl-diethanolamin, N-Stearyl-diethanolamin, oxethyliertes Kokosfettamin, N-Allyl-diethanolamin, N-Methyl-diisopropanolamin, N-Ethyl-diisopropanolamin, N-Propyl-diisopropanolamin, N-Butyl-diisopropanolamin, C-Cyclohexyl-diisopropanolamin, N,N-Dioxethylanilin, N,N-Dioxethyltoluidin, N,N-Dioxethyl-1-aminopyridin, N,N'-Dioxethyl-piperazin, Dimethyl-bisoxethylhydrazin, N,N'-Bis-(2-hydroxy-ethyl)-N,N'-diethyl-hexahydro-p-phenylendiamin, N-12-Hydroxyethyl-piperazin, polyalkoxylierte Amine wie oxy-propyliertees Methyl-diethanolamin, ferner Verbindungen wie N-Methyl-N,N-bis-3-aminopropylamin, N-(3-Aminopropyl)-N,N'-dimethylethylendiamin, N-(3-Aminoproypl)-N-methyl-ethanolamin, N,N'-Bis-(3-aminopropyl)-N,N'-dimethylethylendiamin, N,N'-Bis(3-aminopropyl)piperazin, N-(2-Aminoethyl)-piperazin, N,N'-Bisoxyethyl-propylendiamin, 2,6-Diaminopyridin, Diethanolamino-acetamid, Diethanolamidopropionamid, N,N-Bis-oxyethyl-phenyl-thiosemicarbazid, N,N-Bis-oxethyl-methyl-semicarbazid, p,p'-Bis-aminomethyl-dibenzylmethylamin, 2,6-Diaminopyridin, 2-Dimethylaminomethyl-2-methyl-propandiol-1,3.

Die den erfindungsgemäß eingesetzten Polyurethan-Dispersionen zugrundeliegenden Polyurethane haben weiterhin als wichtigen Bestandteil eine zur wäßrigen Lösung befähigende funktionelle Komponente. Als solche können eingesetzt werden Dihydroxy- oder auch Diamino-Verbindungen, die eine ionisierbare Carbonsäure-, Sulfonsäure-, Amino- oder Ammoniumgruppe enthalten. Diese Verbindungen können entweder als solche eingesetzt werden oder sie können in-situ hergestellt werden. Um ionisierbare Carbonsäuregruppen tragende Verbindungen in das Polyurethan einzubringen, kann der Fachmann den Polyolen zweckmäßigerweise eine zur Salzbildung befähigte Dihydroxycarbonsäure zugeben. Eine bevorzugte Dihydroxycarbonsäure ist beispielsweise die Dimethylolpropionsäure.

Um zur Salzbildung befähigte Sulfonsäuregruppen einzuführen, kann den Polyolen eine Diaminosulfonsäure zugesetzt werden. Beispiele sind 2,4-Diaminobenzolsulfonsäure aber auch die N-(w-Amino-alkan)-w'-aminoalkansulfonsäuren, wie sie in der DE 20 35 732 beschrieben sind.
In den erfindungsgemäß eingesetzten Polyurethan-Dispersionen liegen die Polymeren, sofern anionisch modifiziert, in Salzform vor. Bei den bevorzugten mit Carbonsäuren oder Sulfonsäuren modifizierten Polymeren liegen als Gegenionen Alkalimetallsalze, Ammoniak oder Amine, d.h. primäre, sekundäre oder tertiäre Amine vor.

Im Sinne der Erfindung ist es bevorzugt, die Neutralisierungsmittel in stöchiometrischem Verhältnis oder im Überschuß einzusetzen, bezogen auf Säuregruppen.

Die zur Salzbildung befähigten Gruppen können daher durch die Gegenionen teil- oder vollständig neutralisiert werden. Auch ein Überschuß an Neutralisationsmittel ist möglich.

Neben oder anstelle der bevorzugten Modifizierung mit zur Salzbildung befähigten Komponenten kann auch eine nicht-ionische Modifizierung die Wasserlöslichkeit herbeiführen. Zur nicht-ionischen Modifizierung eignen sich in erster Linie Monoalkohole, die durch Umsetzung von primären Alkoholen mit Ethylenoxid erhalten werden. Die erforderliche Mengen an nicht-ionischen Modifizierungsmitteln ist von der Hydrophilie des Gesamtsystems abhängig, d.h. sie ist dann niedriger, wenn zum Aufbau des Polymeren als Polyole bereits Polyole auf Basis Polyethylenglykol eingesetzt worden sind. Selbstverständlich ist die Menge auch dann niedriger, wenn zusätzlich ionische Gruppen eingebaut werden. Die Obergrenze ist durch die Wasserfestigkeit des Klebefilms gegeben. So können sich beispielsweise, bezogen auf den Feststoff, bis zu 85 Gew.-% des Polyurethans von Ethylenoxid herleiten. Verzichtet man auf eine ionische Modifizierung, so liegen übliche Werte bei 5 bis 50 Gew.-%. Bei der Mitverwendung von ionischen Modifizierungsmitteln kann jedoch jeder andere darunterliegende Wert eingestellt werden.

Darüber hinaus können als nichtionische hydrophile Modifizierungsmittel noch zusätzlich monofunktionelle Alkohole, insbesondere Etheralkohole eingesetzt werden. Bevorzugt sind dabei die Umsetzungsprodukte von C₁-C₁₀-Alkoholen mit Ethylenoxid im Molekulargewichtsbereich bis 20 000, vorzugsweise 200 bis 6 000.

Zur Herstellung der für die erfindungsgemäßen Zwecke insbesondere geeigneten Polyurethane werden die Polyole und eine Überschuß an Diisocyanat unter Bildung eines Polymers mit endständigen Isocyanatgruppen umgesetzt, wobei geeignete Reaktionsbedingungen und Reaktionszeiten sowie Temperaturen je nach dem betreffenden Isocyanat variiert werden können. Der Fachmann weiß, daß die Reaktionsfähigkeit der umzusetzenden Bestandteile ein entsprechendes Gleichgewicht zwischen Reaktionsgeschwindigkeit und unerwünschten Nebenreaktionen, die zu einer Verfärbung und Molekulargewichtsverringerung führen, notwendig macht. Typischerweise wird die Reaktion unter Rühren bei ungefährt 50 bis ungefähr 120 °C innerhalb von ungefährt 1 bis 6 Stunden durchgeführt. Weitere Angaben zur Herstellung geeigneter Polyurethane sind der EP 405 329 zu entnehmen, auf die ausdrücklich Bezug genommen wird.

Die in den erfindungsgemäßen Klebestiften eingesetzten Polyurethan-Dispersionen können jedoch auch ohne Mitverwendung von Aceton als Lösungsmittel hergestellt werden. Hierzu kann man von den im Sinne der Erfindung bevorzugten Polyolen auf Basis Polytetrahydrofuran oder dessen Copolymeren mit Ethylenoxid oder Propylenoxid ausgehen, wobei vorzugsweise niedrige molekulare Polyole, etwa solche mit einem Molgewicht bis 2 000 oder bis 1 000, eingesetzt werden. Die Polyole werden dann in einem OH : NCO-Verhältnis in Gegenwart eines Polyols, das Säuregruppen trägt, also z.B. von Dimethylolpropionsäure, in einem OH : NCO-Verhältnis größer 1 : 1,2 umgesetzt, wobei noch rührbare Harze entstehen, die dann direkt in Wasser dispergiert werden können.

Im Sinne der Erfindung ist es bevorzugt, Polyurethan-Dispersionen einzusetzen, die klar bis opak sind. Um im wesentlichen klare, d.h. transparente opake bis wasserklare Polyurethan-Dispersionen zu erhalten, muß der Fachmann auf ein bestimmtes Verhältnis zwischen der zur Salzbildung befähigten Komponente und den übrigen, das Polyurethan aufbauenden Stoffe achten. So ist es zweckmäßig, die zur Salzbildung befähigte Komponente - berechnet als Dimethylolpropionsure - in Mengen von 1 bis 30, vorzugsweise von 2 bis 20, und insbesondere von 10 bis 18 Gew.-%, bezogen auf Polyol, einzusetzen. Bezogen auf Polyurethanfeststoff und berechnend als Dimethylolpropionsäure sind dies 5 bis 35 Gew.-%, vorzugsweise 5 bis 20 Gew.-% und insbesondere 5 bis 15 Gew.-%. Weiterhin hängt die Transparenz vom Neutralistationsgrad ab. Dabei kann der Fachmann durch wenige Vorversuche feststellen, ab welcher Menge an Ionenbildung befähigtem Modifizierungsmittel bzw. ab welcher Menge an Neutralisationsmittel ein ausreichender Grand an Transparenz erreicht ist. Im allgemeinen wird so wenig wie möglich von diesen Stoffen eingesetzt werden, da sie bei überhöhtem Einsatz die Wasserfestigkeit des Klebefilms stören können.

Bei der Herstellung der den erfindungsgemäßen Klebestiften zugrundeliegenden Polyurethan-Dispersionen hat der Fachmann auf das Verhältnis von Hydroxylgruppen zu Isocyanatgruppen zu achten. Dieses kann zwischen 1,0 : 0,8 und 1,0 : 4,0 liegen. Bevorzugt sind Verhältnis von 1,0 : 1,1 bis 1,0 : 2,0, insbesondere 1,0 : 1,1 bis 1,0 : 1,8. Wäßrige Polyurethan-Dispersionen mit diesen Verhältnissen sind insbesondere dann zweckmäßig, wenn sie ein Reaktionsprodukt aus einer Polyolmischung, einer zur Salzbildung in alkalischer Lösung befähigten Komponente und einem Polyisocyanat sind.

Geeignete Polyurethan-Dispersionen können in einem weiten Konzentrationsbereich hergestellt werden. Bevorzugt sind Zubereitungen mit einem Feststoffgehalt zwischen 20 und 80 Gew.-%, insbesondere 30 bis 60 Gew.-%.

Der Anteil des Polyurethans am Klebestift insgesamt sollte 10 bis 60, insbesondere 15 bis 35 Gew.-% betragen, bezogen auf die Summe der Masse der Polymeren, der Seife sowie weiterer Hilfsstoffe und Wasser.

Als zweites Polymer mit Klebstoffcharakter wird erfindungsgemäß Polyvinylpyrrolidon (PVP) verwendet. Es sollte zweckmäßigerweise ein Molekulargewicht von mindestens ca. 10 000, insbesondere von ca. 50 000 bis 3 000 000 und vor allem von ca. 400 000 bis 1,5 Mill. haben. Das PVP muß in einer Menge von 0,5 bis 30 Gew.-%, vorzugsweise 1 bis 15 Gew.-%, bezogen auf die Gesamtmasse, zugesetzt werden. Der Anteil beider klebender Polymerer sollte zusammen 15 bis 65, vorzugsweise 18 bis 35 Gew.-% betragen.

Die erfindungsgemäßen Klebestifte enthalten als Seifen zur Ausbildung der Gelstruktur Alkali-, insbesondere Natriumsalze von C₁₂- bis C₂₂-Fettsäuren natürlichen oder synthetischen Ursprungs. Bevorzugt sind C₁₄ bis C₁₈-Fettsäuregemische. Die Natriumsalze der Fettsäuren, also die Seifen, sind in Mengen von 2 bis 20 Gew.-%, bezogen auf Klebestiftmasse, vorzugsweise von 3 bis 12 Gew.-%, vorhanden.

In den erfindungsgemäßen Klebestiften können die bei Klebestiften üblichen Hilfsstoffe in Mengen von 0 bis 25 Gew.-%, bezogen auf den Klebestift, miteingesetzt werden, insbesondere wasserlösliche Weichmacher, Farbstoffe, Duftstoffe, Harze, Konservierungsmittel und/oder feuchtigkeitsregulierende Stoffe.

Im Sinne der Erfindung ist es jedoch bevorzugt, Weichmacher und/oder feuchtigkeitsregulierende Stoffe, das sind organische wasserlösliche Lösungsmittel, die üblicherweise in Klebestiften verwandt werden, nicht einzusetzen. Gleichwohl können diese Verbindungen gewünschtenfalls in untergeordneten Mengen vorhanden sein. Es handelt sich dabei um Polyglykolether, insbesondere Polyethylenglykol und Polypropylenglykol, wobei die bevorzugten Polyether ein durchschnittliches Molekulargewicht im Bereich von 200 bis 4 000, insbesondere im Bereich von 500 bis 2 000, aufweisen. Miteingesetzt werden können weiterhin polyfunktionelle Alkohole wie Glycerin, Trimethylolpropan, Propylenglykol, Sorbit, Zucker, Polyglycerin, niedermolekulare Stärkehydrolysate und/oder Polyetherglykole. So kann beispielsweise gewünschtenfalls ein Gemisch aus Glycerin und Polyethylenglykol mitverwendet werden. Die genannten nicht-flüchtigen organischen Lösungsmittel sollten dabei höchstens in Mengen bis 50 Gew.-%, bezogen auf den Wassergehalt der Stifte, eingesetzt werden.

Außerdem können noch weitere Hilfsmittel mitverwendet werden, beispielsweise Substanzen, die den leichten und weichen Abrieb fördern. Derartige Substanzen sind beispielsweise Aminocarbonsäuren und/oder ihre Lactame. Geeignete Aminocarbonsäuren bzw. deren Lactame sollten bis zu 12 C-Atomen, insbesondere 4 bis 8 C-Atome enthalten. Der für die praktische Verwendung bevorzugte Vertreter ist Epsilon-Caprolactam bzw. die sich daraus ableitende 7-Aminocapronsäure. Die Menge der zu verwendenden Lactame oder der entsprechenden Aminocarbonsäuren beträgt üblicherweise nicht mehr als 15 Gew.-%, beispielsweise 1 bis 10 Gew.-%, bezogen auf die Gesamtstiftmasse.

Als weitere Hilfsstoffe können die erfindungsgemäßen Klebestifte Pigmente, Farbstoffe, Antioxidantien, Bittertoffe, Füllstoffe, Duftstoffe, Konservierungsmittel, Harze, wasserlösliche Weichmacher und/oder feuchtigkeitsregulierende Stoffe enthalten. Die Mengen dieser Stoffe sind wie üblich untergeordnet, d.h. 0 bis ca. 20 %, bezogen auf den Klebestift insgesamt. Beispiele für besondere Farbstoffe sind: pH- und wärmeabhängige Farbstoffe, optische Aufheller, Farbstoffe mit Farbwechselfunktionen beim Auftragen, insbesondere im Funktionsbereich. Der Farbstoff kann homogen im Klebestoff verteilt sein. Möglich ist aber auch eine strukturierte Einfärbung, z.B. einer Kern/Mantel-Struktur. Beispiele für Pigmente oder Füllstoffe sind: Graphit, Talkum, TiO₂, hochdisperse Kieselsäure (Aerosil), Bentonit, Wollastonit, Kreide, Magnesiumoxid und Glasfasern. Weitere mögliche Additive sind beispielsweise Dextrine, Cellulosederivate und nicht destrukturierte Stärkederivate. Als weitere Additive können Mannane, insbesondere Galactomannane in den erfindungsgemäßen Klebestiften enthalten sein. Geeignet sind insbesondere die Galactomannane aus den Früchten des Johannisbrotbaums und aus Guarmehl. Die destrukturierten Stärkeether können auch zu einem untergeordneten Anteil durch destrukturierte Mannane ersetzt werden.

Die einzelnen Komponenten sind vorzugsweise in folgenden Mengen im Klebestift enthalten: 3 bis 10 Gew.-% Seifen, 15 bis 65 Gew.-% PU- bzw. PVP-Polymere und 0 bis 25 Gew.-% Hilfsstoffe. Der Rest zu 100 % ist Wasser. Es liegt vorzugsweise im Bereich von 35 bis 65, insbesondere von 40 bis 55 Gew.-%, bezogen auf den Klebestift insgesamt.

Zur Herstellung der erfindungsgemäßen Klebestifte werden die Seifengel-bildenden Bestandteile und die Polyurethan-Dispersion sowie das PVP und die Hilfsstoffe miteinander vermischt, auf Temperaturen von mindestens 50 °C, vorzugsweise auf bis zu 100 °C (bzw. Kochpunkt), enrvärmt, bis eine gleichmäßige Mischung entstanden ist, die Mischung in Formen gießt und sie ohne mechanische Beeinflussung unter Gelbildung abkühlen läßt.. Es ist bevorzugt, diese Mischungen, die im erwähnten Temperaturbereich leicht gießbar sind, direkt in Formen, insbesondere in Stifthülsen oder ähnliche Gebinde zu gießen und sie ohne mechanische Beeinflussung zu den gewünschten Gelen erstarren zu lassen. Der Klebestift ist in einer verschließbaren Hülle, insbesondere aus Polyolefin, gelagert. Obwohl der Tack sehr hoch ist, ist er darin verschiebbar.

Die erfindungsgemäße Klebemasse ist also sehr einfach in eine Stiftform zu bringen, und zwar gleich in den Hülsen, die später seine Handhabung erlauben. Diese Formgebung ist so einfach, daß jedermann nach Verbrauch des ursprünglichen Klebestiftes durch Erwärmen einer weiteren erfindungsgemäßen Klebemasse und Eingießen in die Stifthülsen einen gut handhabbaren Klebestift in der alten Hülse herstellen kann. Die Stifthülse ist also mehrfach verwendbar.

Da der erfindungsgemäße Klebestift fest ist und sich geschmeidig abreiben läßt, wird er zweckmäßigerweise in geometrischer, insbesondere zylindrischer Form verwendet. Der Zylinder kann einen kreisrunden, ovalen oder vieleckigen Querschnitt haben. Die Größe der Dimension richtet sich nach der Anwendung, z.B. nach der gewünschten Breite der zu bedeckenden Fläche. Auch quaderförmige Blöcke sind möglich. Die zweckmäßige Form richtet sich nach dem Auftrag der Klebemasse auf das Substrat.

Die erfindungsgemäßen Klebestifte zeigen den Vorteil höherer Klebkraft und sind daher nicht nur für die Papierverklebung anwendbar, sondern insbesondere für Pappe, Tapeten, Leder, Holz, Holzwerkstoffe, Kunststoffe, Glas, Metall, Keramik, Gips, und zwar mit sich selbst oder untereinander, insbesondere für saugfähige Hölzer oder andere Substrate wie Pappe, auch in Kombination mit PVC, PMMA, PBS, Aluminium.

Wegen der hohen Klebkraft auf vielen unterschiedlichen Substraten kann der Klebestift wie ein "Alleskleber" verwendet werden, zumal sein Auftrag aus der Hülse einfach und gleichmäßig ist. Konkrete Beispiele sind: Bastelarbeiten, bei denen die Festigkeiten eines herkömmlichen Klebestiftes nicht ausreichen, wie Verklebungen von Moosgummi auf Pappe oder Holz.
Wegen der hohen Wärmestandfestigkeit eignet er sich zum Verkleben von z.B. Fensterbildern, die direkt den Sonnenstrahlen ausgesetzt sind.

Obwohl das PU und das PVP wasserlöslich oder wasserdispergierbar sind, ist die Wasserbeständigkeit der Verklebung beachtlich. So sind beispielsweise im feuchten Klima von 80 % relativer Luftfeuchte / 30 °C noch 20 % der Ausgangs-Festigkeiten vorhanden.

Fehlklebungen oder Klebstoffreste können leicht mit alkalisch reagierendem Wasser wieder entfernt werden, indem man die betroffenen Stellen 10 min lang mit einem feuchten Tuch abdeckt und die Klebestelle aufweicht und anschließend die Reste abwischt.

Die erfindungsgemäße Klebemasse bindet relativ schnell im Vergleich mit Standard-Allesklebern ab, z.B. auf Holz/PVC. Es bleibt aber noch genügend Zeit für eine Korrektur. Die offene Zeit liegt im Bereich von 10 bis 120 sec, vorzugsweise von 20 bis 60 sec.

Die Stift-Form ist besonders zweckmäßig, wenn die erfindungsgemäße feste und leicht abreibbare Klebemasse mit der Hand aufgetragen werden soll. Bei einer anderen Applikation kann eine andere Form vorteilhafter sein, z.B. eine QuaderForm, wenn maschinell größere Flächen beschichtet werden sollen.

### Beispiele

### 1. Ausgangsstoffe

*
1. Herstellung der Polyurethanlösungen bzw. Dispersionen
Die Herstellung der Polyurethanklebrohstoffe erfolgt nach dem Aceton-Verfahren, wobei auch andere Herstellverfahren wie z.B. Dispergierung der extrudierten Präpolymerschmelze (Schmelzextrudierverfahren) möglich sind. Polyisocyanate und Diolkomponenten (Polyetherdiol und Dimethylolpropionsäure) werden vorgelegt und bis zur Konstanz des NCO-Wertes unter Rückfluß bei ca. 65 - 100 °C gerührt. Nach Beendigung der Reaktion wird unter heftigem Rühren die angegebene Wassermenge zugegeben, die die berechneten Laugenanteile und evtl. Kettenverlängerer enthält. Das Einbringen hoher Scherkräfte ist für die Qualität und besonders die Homogenität der Dispersion von großer Bedeutung. Nach mehrstündigem Rühren wird das Lösemittel, bis die Acetonkonzentration deutlich unter 0,1 liegt und bis die in Tabelle I enthaltenen Viskositäten und Festkörpergehalte erreicht sind, abdestilliert.
2. Es wurde ein PVP mit einem K-Wert von 90 der Firma ISP verwendet.
3. Epsilon-Capolactam.
4. Natrium-Palmitat der Firma Henkel.

**Tabelle I**

| Polyurethan-Nr. | l |
|---|---|
| Gew.-Teile Wasser | 1363 |
| Gew.-Teile TMXDI | 242 |
| Gew.-Teile Polypropylenglykol (MG 400) | 40 |
| Gew.-Teile Polypropylenglykol (MG 1000) | 300 |
| Gew.-Teile Polytetrahydrofuran (MG 850) | 65 |
| Gew.-Teile Dimethylolpropionsäure | 67 |
| Gew.-Teile NaOH (100 %ig) | 20 |
| Festkörpergehalt (%) | 35 |
| Viskosität bei 20 °C (mPas) | 3500 |

### II. Herstellung der Stiftmassen

Die Stiftmassen werden durch Mischen der Einzelkomponenten aus Tabelle II bei 65 bis 100 °C erhalten und anschließend in Stifthülsen zum Erkalten abgefüllt, gegebenenfalls wird durch geringfügige Zugabe verdünnter Natronlauge der pH-Wert der Masse im Bereich pH 8 - 11 eingestellt.

**Tabelle II**

| Inhaltsstoff/ Eigenschaften | Beispiel 1 | Beispiel 2 | Beispiel 3 | Beispiel 4 |
|---|---|---|---|---|
| PU-Dispersion 35 % FK Gew.-% | 91 | 88 | 85 | 0 |
| PVP Gew.-% | 0 | 3 | 6 | 26 + 65 Wasser |
| Epsilon-Caprolactam Gew.-% | 1 | 1 | 1 | 1 |
| Na-palmitat | 8 | 8 | 8 | 8 |
| Zugscherfestigkeiten an Buche/Buche MPa | 3 | 4 | 5,5 | 1,5 |
| Buche/PVC in MPa | 2,2 | 3,3 | 5,2 | 1,3 |
| Offene Zeit | 10 | 20 | 40 | 10 |
| Abbindezeit (sec) | 10 | 15 | 15 | 10 |
| Wärmestandfestigkeit °C | 55 | 75 | 100 | 100 |
| Tack | mittel | gut | sehr gut | sehr schlecht |

### III. Untersuchungen

### 1) Druckfestigkeit

Unter dem Begriff Druckfestigkeit ist die beim Zusammenbrechen der Stiftform unter Druckbelastung parallel zur Längsachse gemessene Höchstlast zu verstehen. Zur Messung der Druckfestigkeit dient das Prüfgerät Modell 464L, Meßkopf 709, der Firma Erichsen, Simonhöfchen, Wuppertal.
Der unmittelbar oberhalb des Kolbens abgeschnittene Klebstoff mit einer Mindestlänge von 30 mm wird zwischen zwei Haltestücke eingesteckt; hierbei handelt es sich um Scheiben aus Hart-PVC, deren Dicke ca. 10 mm beträgt und die eine, den jeweiligen Stiftdurchmessern angepaßte kreisrunde Vertiefung von 3 mm aufweisen. Der mit den Haltestücken versehene Stift wird zentrisch auf den Prüftisch des Druckfestigkeitstesters gestellt. Die Höhe des Kraftmeßinstrumentes über dem Prüftisch wird der Höhe des Prüfteils angepaßt. Dann fährt man den Meßkopf mit einer Vorschubgeschwindigkeit von ca. 70 mm pro Minute gegen den zu prüfenden Stift. Nach Erreichen der größten Druckkraft wird der Wert von der digitalen Anzeige abgelesen. Die erfindungsgemäßen Klebestifte haben eine Druckfestigkeit im Bereich von ca. 25 bis 50 N/16 mm Durchmesser.

### 2) Abbindezeit

Um zu prüfen, ob die Klebeeigenschaften der Stifte für den Verwendungszweck ausreichen, werden unter bestimmten Verarbeitungsbedingungen von Hand Probeklebungen durchgeführt und beurteilt. Hierbei wird wie folgt verfahren: Ein Vorrat an einseitig gestrichenem, weißem Chrompapier (Flächengewicht ca. 100 g/qm) und zu prüfende Klebestifte werden mindestens 24 Stunden bei 20 °C und 65 % relativer Luftfeuchtigkeit klimatisiert. Das Prüfpapier wird in 5 cm breite und ca. 30 cm lange Streifen geschnitten. Über die ungestrichene Seite eines solchen Papierstreifens wird ein Klebestift, unter möglichst gleichmäßigem Druck, in Längsrichtung zweimal abgerieben, wobei ein gleichmäßiger Auftrag entstehen soll. Unmittelbar danach wird auf diesen Streifen ein zweiter, nicht mit Klebstoff versehener Papierstreifen mit der ungestrichenen Seite nach innen aufgelegt und mit der Hand angerieben. Sodann wird versucht, die Papierstreifen langsam voneinander abzuschälen. Der Zeitpunkt, zu dem eine Trennung in der Klebzone nur noch unter Papierausriß auf voller Breite möglich ist, kennzeichnet die Abbindezeit.

### 3) Offene Zeit

Die Offene Zeit beschreibt den Zeitraum nach dem Klebstoffauftrag, innerhalb dessen ein Zusammenfügen der zu klebenden Materialien erfolgen muß, um nach der Abbindung noch einen vollständigen Papierausriß im Trennversuch zu erhalten. Die Methode entspricht der Prüfung der Abbindezeit, jedoch werden die Papierstreifen nach dem Klebstoffauftrag erst nach definierten Zeiten zusammengefügt. Beginnend mit 15 Sekunden kann die Abstufung beispielsweise jeweils weitere 15 Sekunden betragen. Bei langsam abbindenden Klebstoffen mit einer voraussehbaren längeren Offenen Zeit wählt man entsprechend größere Abstände.

### 4) Abrieb

Die Beschreibung des Abriebs ist eine subjektive Beurteilung durch mindestens zwei Testpersonen. Dabei werden die Anwendungseigenschaften wie folgt charakterisiert und eingestuft:
glatt, geschmeidig, stumpf, bröckeln, schmierend, hart, weich und fadenziehend.

### 5) Zugscherfestigkeit von Holz/Holz-Verklebungen

Buchenholz-Prüfkörper sowie die PVC-Prüfkörper werden an ihrem Ende mit Klebstoff eingerieben und so zusammengelegt, daß die beiden mit Klebstoff versehenen Enden 2 cm überlappen (Klebefläche 2 cm x 2,5 cm). Die Prüfkörper werden mit zwei Klammern fixiert und nach 24 Stunden gemessen. Der Meßwert wird in N/mm2 angegeben.

### 6) Wärmestandfestigkeit

Herstellung der Verklebungen siehe Prüfung der Zugscherfestigkeit. Der Preßdruck beträgt hier 1,0 N/mm².

Nach dem Erreichen der Endfestigkeit nach ca. 3 bis 5 Tagen bei Raumtemperatur werden die Proben in den Wärmeschrank gehängt. Die Verklebung wird nun zuerst mit einem 1 kg Stein belastet. Der Wärmeschrank erhöht die Temperatur stufenweise innerhalb von 30 Stunden von 30 °C auf 120 °C. Standardprogramm: 30 h von 30 °C bis 120 °C, alle 3 h 10 °C Temperaturerhöhung. Hält die Verklebung das Gewicht während des gesamten Programms, wird die Belastung zunächst auf 2 kg und danach auf 5 kg erhöht. Jede Bestimmung wird an mindestens drei Verklebungen pro Klebstoff durchgeführt.

Durch Vergleichen der gemessenen Zeit mit der Tabelle wird die Wärmestandfestigkeit des Klebstoffes ermittelt.

| | | | | | | | | | | |
|---|---|---|---|---|---|---|---|---|---|---|
| h | 0-3,0 | 3-6 | 6-9 | 9-12 | 12-15 | 15-18 | 18-21 | 21-24 | 24-27 | 27-30 |
| °C | 30 °C | 40 °C | 50 °C | 60 °C | 70 °C | 80 °C | 90 °C | 100°C | 110°C | 120°C |

### 7) Tack

Die Prüfung erfolgt im Normalklima 23 °C/50 % relative Feuchtigkeit mit dort mindestens 3 Tage gelagerten Prüfkörpern aus Buchensperrholz.
Zwei Holzprüfkörper mit den Maßen 80 mm x 25 mm x 4 mm werden mit einer Überlappung von 20 mm Länge entsprechend einer Überlappungsfläche von 500 mm², mit dem jeweiligen Klebstoff beschichtet, mit einem Druck von 0,2 N/mm² 5 sec lang zusammengedrückt und sofort oder nach 2, 4, 6 oder 8 min mit einer Scherkraft von 200 g belastet. Der Test gilt als bestanden, wenn die Teile innerhalb einer Stunde nicht mehr gegeneinander verrutschen.

In Abhängigkeit von der benötigten Zeit wird der Tack entsprechend der folgenden Abstufung bewertet:

| | |
|---|---|
| sehr gut | sofort (0 min) |
| gut | zwischen 0 und 2 min |
| mittel | zwischen 2 und 4 min |
| schlecht | zwischen 4 und 6 min |
| sehr schlecht | mehr als 6 min |

Die Untersuchungsergebnisse (s. Tabelle II) zeigen, daß die erfindungsgemäße Klebemasse aus der Kombination beider Polymerer zu einem besseren Tack und zu einer höheren Wärmestandfestigkeit führt als die einzelnen Polymere alleine.

## Patentansprüche

1. Klebestift, herstellbar aus einer wäßrigen Zubereitung eines synthetischen Polymeren mit Klebstoffcharakter und einem Seifengel als formgebender Gerüstsubstanz sowie gewünschtenfalls weiteren Hilfsstoffen, **dadurch gekennzeichnet, daß** die wäßrige Zubereitung eines synthetischen Polymeren eine Mischung von Polyurethan und 0,5 bis 30 Gew.-%, bezogen auf die Gesamtmasse, Polyvinylpyrrolidon enthält, wobei das Polyurethan ein Reaktionsprodukt mindestens eines Polyols, mindestens eines mehrfunktionellen Isocyanats, mindestens einer in alkalischer wäßriger Lösung zur Salzbildung befähigten Komponente und/oder eines nichtionischen hydrophilen Modifizierungsmittels und gewünschtenfalls mindestens eines Kettenverlängerungsmittels ist.

2. Klebestift nach Anspruch 1, **dadurch gekennzeichnet, daß** die wäßrige Zubereitung das Polyurethan in Form einer Dispersion enthält.

3. Klebestift nach einem der Ansprüche 1 oder 2, **dadurch gekennzeichnet, daß** die wäßrige Polyurethan-Dispersion ein Reaktionsprodukt aus einer Polyolmischung, einer zur Salzbildung in alkalischer Lösung befähigten Komponente und einem Polyisocyanat in einem Verhältnis OH : NCO von 1,0 : 0,8 bis 1,0 : 4,0, vorzugsweise 1,0 : 1,1 bis 1,0 : 2,0, insbesondere 1,0 : 1,1 bis 1,0 : 1,8 enthält.

4. Klebestift nach einem der Ansprüche 1, 2 oder 3, **dadurch gekennzeichnet, daß** die wäßrige Polyurethan-Dispersion ein Reaktionsprodukt eines Polyether- und/oder Polyesterpolyols als Polyol enthält.

5. Klebestift nach einem der Ansprüche 1 bis 4, **dadurch gekennzeichnet, daß** die wäßrige Po yurethan-Dispersion ein Reaktionsprodukt einer zur Salzbildung befähigten Dihydroxycarbonsäure enthält.

6. Klebestift nach einer der Ansprüche 1 bis 5, **dadurch gekennzeichnet, daß** die wäßrige Polyurethan-Dispersiön ein Reaktionsprodukt mindestens eines zwei- oder dreifunktionellen aliphatischen Isocyanats ist.

7. Klebestift nach mindestens einem der vorangegangenen Ansprüche, **gekennzeichnet durch** das Molekulargewicht des Polyvinylpyrrolidons von mindestens 10 000.

8. Klebestift nach einem der Ansprüche 1 bis 7, **dadurch gekennzeichnet, daß** als die Gelstruktur bildende Seife Natriumsalze von C₁₂- bis C₂₂-Fettsäuren natürlichen oder synthetischen Ursprungs enthalten sind.

9. Klebestift nach einem der Ansprüche 1 bis 8, **dadurch gekennzeichnet, daß** als weitere Hilfsstoffe wasserlösliche Weichmacher, Farbstoffe, Duftstoffe, Harze, Konservierungsmittel und/oder feuchtigkeitsregulierende Stoffe enthalten sind.

10. Verfahren zur Herstellung von Klebestiften nach den Ansprüchen 1 bis 9, **dadurch gekennzeichnet, daß** man die Seifengel-bildenden Bestandteile und die Polyurethan-Dispersion sowie 0,5 bis 30 Gew.-%, bezogen auf die Gesamtmasse, Polyvinylpyrrolidon und die Hilfsstoffe miteinander vermischt, auf Temperaturen von mindestens 50°C erwärmt, bis eine gleichmäßige Mischung entstanden ist, die Mischung in Formen gießt und sie ohne mechanische Beeinflussung unter Gelbildung abkühlen lässt, wobei das Polyurethan ein Reaktionsprodukt mindestens eines Polyols, mindestens eines mehrfunktionellen Isocyanats, mindestens einer in alkalischer wäßriger Lösung zur Salzbildung befähigten Komponente und/oder eines nichtionischen hydrophilen Modifizierungsmittels und gewünschtenfalls mindestens eines Kettenverlängerungsmittels ist.

11. Verwendung der Klebestofte nach mindestens einem der vorangegangenen Ansprüche zum Kleben von Papier. Pappe, Leder, Kunststoffen, Metall, Keramik, Glas mit sich selbst und untereinander.

## Claims

1. An adhesive stick, produced from a water-based preparation of a synthetic polymer of adhesive character and a soap gel as the shaping gel-forming substance and, optionally, other auxiliaries, **characterized in that** the water-based preparation of a synthetic polymer contains a mixture of polyurethane and 0.5 to 30 % by weight based on the adhesive as a whole, polyvinyl pyrrolidone, the polyurethane being a reaction product of at least one polyol, at least one polyfunctional isocyanate, at least one component capable of salt formation in alkaline aqueous solution and/or a nonionic hydrophilic modifying agent and optionally at least one chain extending agent.

2. An adhesive stick as claimed in claim 1, **characterized in that** the water-based preparation contains the polyurethane in the form of a dispersion.

3. An adhesive stick as claimed in claim 1 or 2, **characterized in that** the aqueous polyurethane dispersion contains a reaction product of a polyol mixture, a component capable of salt formation in alkaline solution and a polyisocyanate in an OH:NCO ratio of 1.0:0.8 to 1.0:4.0, preferably 1.0:1.1 to 1.0:2.0 and more preferably 1.0:1.1 to 1.0:1.8.

4. An adhesive stick as claimed in claim 1, 2 or 3, **characterized in that** the aqueous polyurethane dispersion contains a reaction product of a polyether and/or polyester polyol as the polyol.

5. An adhesive stick as claimed in any of claims 1 to 4, **characterized in that** the aqueous polyurethane dispersion contains a reaction product of a dihydroxycarboxylic acid capable of salt formation.

6. An adhesive stick as claimed in any of claims 1 to 5, **characterized in that** the aqueous polyurethane dispersion is a reaction product of at least one difunctional or trifunctional aliphatic isocyanate.

7. An adhesive stick as claimed in at least one of the preceding claims, **characterized by** the molecular weight of the polyvinyl pyrrolidone of at least 10,000.

8. An adhesive stick as claimed in any of claims 1 to 7, **characterized in that** sodium salts of C ₁₂₋₂₂ fatty acids of natural or synthetic origin are present as the soap forming the gel structure.

9. An adhesive stick as claimed in any of claims 1 to 8, **characterized in that** the water-soluble plasticizers, dyes, perfumes, resins, preservatives and/or moisture regulators are present as further auxiliaries.

10. A process for the production of the adhesive stick claimed in claims 1 to 9, **characterized in that** the constituents forming the soap gel and the polyurethane dispersion, 0.5 to 30 % by weight based on the adhesive as a whole, polyvinyl pyrrolidone and the auxiliaries are mixed together, heated to temperatures of at least 50°C until a uniform mixture is formed, the mixture thus formed is poured into molds and is left therein to cool without any mechanical action until a gel is formed, the polyurethane being a reaction product of at least one polyol, at least one polyfunctional isocyanate, at least one component capable of salt formation in alkaline aqueous solution and/or a nonionic hydrophilic modifying agent and optionally at least one chain extending agent.

11. The use of the adhesives claimed in at least one of the preceding claims for bonding paper, paperboard, leather, plastics, metals, ceramics, glass to materials of the same or different kinds.

## Revendications

1. Bâton de colle, qui peut être fabriqué à partir d'une préparation aqueuse d'un polymère synthétique possédant un caractère adhésif et à partir d'un gel savonneux à titre de substance de soutien conférant la forme et, si on le souhaite, à partir d'autres adjuvants, **caractérisé en ce que** la préparation aqueuse d'un polymère synthétique contient un mélange de polyuréthane et, à concurrence de 0,5 à 30 % en poids rapportés à la masse totale, de la polyvinylpyrrolidone, le polyuréthane représentant un produit de réaction d'au moins un polyol, d'au moins un isocyanate polyfonctionnel, d'au moins un composant manifestant une aptitude à la salification dans une solution alcaline aqueuse et/ou d'un agent de modification hydrophile non ionique et, si on le souhaite, d'au moins un agent d'allongement de chaîne.

2. Bâton de colle selon la revendication 1, **caractérisé en ce que** la préparation aqueuse contient le polyuréthane sous forme d'une dispersion.

3. Bâton de colle selon l'une quelconque des revendications 1 ou 2, **caractérisé en ce que** la dispersion aqueuse de polyuréthane contient un produit de réaction d'un mélange de polyols, d'un composant manifestant une aptitude à la salification dans une solution alcaline et d'un polyisocyanate dans un rapport OH : NCO de 1,0 : 0,8 à 1,0 : 4,0, de préférence de 1,0 : 1,1 à 1,0 : 2,0, en particulier de 1,0 : 1,1 à 1,0 : 1,8.

4. Bâton de colle selon l'une quelconque des revendications 1, 2 ou 3, **caractérisé en ce que** la dispersion aqueuse de polyuréthane contient un produit de réaction d'un polyétherpolyol et/ou d'un polyesterpolyol, à titre de polyol.

5. Bâton de colle selon l'une quelconque des revendications 1 à 4, **caractérisé en ce que** la dispersion aqueuse de polyuréthane contient un produit de réaction d'un acide dihydroxycarboxylique manifestant une aptitude à la salification.

6. Bâton de colle selon l'une quelconque des revendications 1 à 5, **caractérisé en ce que** la dispersion aqueuse de polyuréthane contient un produit de réaction d'au moins un isocyanate aliphatique bifonctionnel ou trifonctionnel.

7. Bâton de colle selon au moins une des revendications précédentes, **caractérisé par** un poids moléculaire de la polyvinylpyrrolidone d'au moins 10.000.

8. Bâton de colle selon l'une quelconque des revendications 1 à 7, **caractérisé en ce qu'**il contient, à titre de savon formant la structure du gel, des sels de sodium d'acides gras en C₁₂-C₂₂ d'origine naturelle ou synthétique.

9. Bâton de colle selon l'une quelconque des revendications 1 à 8, **caractérisé en ce qu'**il contient, à titre d'adjuvants supplémentaires, des plastifiants solubles dans l'eau, des colorants, des parfums, des résines, des conservateurs et/ou des substances de régulation de l'humidité.

10. Procédé pour la fabrication de bâtons de colle selon les revendications 1 à 9, **caractérisé en ce qu'**on mélange les uns avec les autres les constituants formateurs de gel savonneux et la dispersion de polyuréthane, ainsi que, à concurrence de 0,5 à 30 % en poids, rapportés à la masse totale, de la polyvinylpyrrolidone et les adjuvants, on chauffe le mélange à des températures d'au moins 50 °C jusqu'à ce que l'on obtienne un mélange uniforme, on verse le mélange dans des moules et on le laisse refroidir en l'absence d'une influence mécanique, pour obtenir un gel, le polyuréthane représentant un produit de réaction d'au moins un polyol, d'au moins un isocyanate polyfonctionnel, d'au moins un composant manifestant une aptitude à la salification dans une solution alcaline aqueuse et/ou d'un agent de modification hydrophile non ionique et, si on le souhaite, d'au moins un agent d'allongement de chaîne.

11. Utilisation des adhésifs selon au moins une des revendications précédentes pour le collage du papier, du carton, du cuir, de matières synthétiques, du métal, de la céramique, du verre avec eux-mêmes et les uns avec les autres.
